# EUROPEAN PATENT APPLICATION

(11) **EP 4 834 844 A1**
(43) Date of publication of application: **04.11.2026**
(21) Application number: 24912388.6
(22) Date of filing: 11.12.2024
(51) Int. Cl.: C01F 7/021, C01G 39/00

(54) **PLATE-LIKE ALUMINA PARTICLES AND METHOD FOR PRODUCING PLATE-LIKE ALUMINA PARTICLES**

(30) Priority: 27.12.2023 JP 2023221902
(71) Applicant: DIC Corporation, Tokyo 174-8520 (JP)
(72) Inventor: TABUCHI, Minoru, Sakura-shi, Chiba 285-8668 (JP); WATANABE, Takanori, Sakura-shi, Chiba 285-8668 (JP); KOU, Youki, Sakura-shi, Chiba 285-8668 (JP); SEKINE, Ryosuke, Sakura-shi, Chiba 285-8668 (JP); YAGI, Naoto, Sakura-shi, Chiba 285-8668 (JP); YUAN, Jianjun, Sakura-shi, Chiba 285-8668 (JP)
(74) Representative: TBK
(86) International application number: PCT/JP2024/043890
(87) International publication number: WO 2025/142499

(57) **Abstract**

A plate-like alumina particle comprising at least one element (A) selected from the group consisting of an iron element, a nickel element, a copper element, a chromium element, a cobalt element, a zinc element, a scandium element, and a ruthenium element, and a titanium element.

## Description

### TECHNICAL FIELD

The present invention relates to a plate-like alumina particle and a method for producing the plate-like alumina particle.

The present application claims a priority from Japanese Patent Application No. 2023-221902 filed on December 27, 2023 in Japan, and cites the contents thereof.

### BACKGROUND ART

Alumina particles, which are inorganic fillers, have been used in a variety of applications. Particularly, plate-like alumina particles are used in a wide range of applications, such as a thermally conductive filler, a high brightness pigment, cosmetics, an abrasive material, a conductive powder substrate, and a lubricant for resin film, and especially, there are demanded plate-like alumina particles having such a high aspect ratio that the particles are unlikely to suffer aggregation and have high dispersibility.

With respect to the method for producing plate-like alumina particles, various methods have been conventionally known. For example, as seen in PTL 1, a method has been known in which a mineralizer, such as aluminum fluoride, is added in the calcination step for raw materials. However, this method is disadvantageous in that controlling the particle diameter is difficult, and particularly, it is difficult to produce plate-like alumina having high aspect ratio. Further, the method has a problem of aggregation in that a plurality of the plate-like alumina particles obtained by the method are stacked on one another, or the particles suffer an occurrence of crystal twinning.

With respect to the production of plate-like alumina particles having controlled the size, shape and the like, in recent years, there are a number of reports. For example, PTL 2 has a report that, by conducting calcination using titanium oxide as a crystal controlling agent in the presence of a sulfate which is a high-temperature fluxing agent at a temperature of 1,100°C or higher, flake aluminum oxide comprising titanium oxide and having an average particle diameter of 5 to 60 µm, a thickness of 1 µm or less, and an aspect ratio of 20 or more is obtained.

PTL 3 has a report that, by conducting calcination using zinc oxide as a crystal controlling agent in the presence of a sulfate which is a high-temperature fluxing agent at a temperature of 1,150°C, plate-like α-alumina particles comprising zinc oxide and having an average particle diameter of 15 to 25 µm, a thickness of 0.1 to 0.5 µm, and an aspect ratio of 50 to 250 are obtained.

PTL 4 has a report that, by conducting calcination using zinc oxide and tin oxide as a crystal controlling agent in the presence of a sulfate which is a high-temperature fluxing agent at a temperature of 1,200°C, plate-like α-alumina particles comprising zinc oxide and tin oxide and having an average particle thickness of 0.5 µm or less, an average particle diameter of 30 µm or more, and an aspect ratio of 100 or more are obtained.

PTL 5 has a report that, by conducting calcination using zirconium oxide as a crystal controlling agent in the presence of a sulfate which is a high-temperature fluxing agent at a temperature of 1,150°C, plate-like α-alumina particles having an average thickness of 0.1 to 1 µm, an average diameter of 5 to 25 µm, and an aspect-ratio of 25 to 250 are obtained.

### CITATION LIST

### PATENT LITERATURE

PTL 1: JPS35-6977B
PTL 2: JPH09-77512A
PTL 3: JP2008-534417A
PTL 4: JP2010-502539A
PTL 5: JP2017-516734A

### SUMMARY OF INVENTION

### TECHNICAL PROBLEM

However, in the plate-like alumina obtained by the above-mentioned methods, the calcination step at a temperature as high as 1,100°C or more is needed, and thus a great amount of energy is required for the production of alumina. Recently, for achieving carbon neutrality, SDGs and the like for sustainable society, attempts are being made to reduce energy required for manufacturing, and therefore it is desired that the calcination for the plate-like alumina can be made at a lower temperature.

In view of the above, the present invention has been made, and a task of the invention is to provide a plate-like alumina particle which can be produced by calcination at a temperature lower than the calcination temperature conventionally employed, and a method for producing the plate-like alumina particle.

### SOLUTION TO PROBLEM

The present invention encompasses the following embodiments.
(1) A plate-like alumina particle comprising at least one element (A) selected from the group consisting of an iron element, a nickel element, a copper element, a chromium element, a cobalt element, a zinc element, a scandium element, and a ruthenium element, and a titanium element.
(2) The plate-like alumina particle according to item (1) above, which contains the at least one element (A), in terms of an oxide thereof, in an amount of 0.02 to 2% by mass.
(3) The plate-like alumina particle according to item (1) or (2) above, which contains silicon or a silicon compound, in terms of silicon dioxide, in an amount of 0.1 to 10% by mass.
(4) The plate-like alumina particle according to any one of items (1) to (3) above, which contains silicon or a silicon compound in the surface layer thereof.
(5) The plate-like alumina particle according to any one of items (1) to (4) above, which has a thickness of 0.05 to 1 µm, an average particle diameter of 1 to 30 µm, and an aspect ratio of 5 to 300.
(6) A method for producing the plate-like alumina particle according to any one of items (1) to (5) above, comprising the steps of: mixing an aluminum compound, a molybdenum oxide, silicon or a silicon compound, a compound (A) comprising at least one element (A) selected from the group consisting of an iron element, a nickel element, a copper element, a chromium element, a cobalt element, a zinc element, a scandium element, and a ruthenium element, and a titanium compound to obtain a mixture; and calcining the mixture.

### ADVANTAGEOUS EFFECTS OF INVENTION

In the present invention, there can be provided a plate-like alumina particle which can be produced by calcination at a temperature lower than the calcination temperature conventionally employed, and a method for producing the plate-like alumina particle.

### BRIEF DESCRIPTION OF DRAWINGS

[FIG. 1] FIG. 1 is a SEM examination image of the plate-like alumina particles obtained in Example 1.
[FIG. 2] FIG. 2 shows SEM examination images of the plate-like alumina particles obtained in Example 8.
[FIG. 3] FIG. 3 is a SEM examination image of the alumina particles obtained in Comparative Example 1.
[FIG. 4] FIG. 4 shows SEM examination images of the alumina particles obtained in Comparative Example 2.

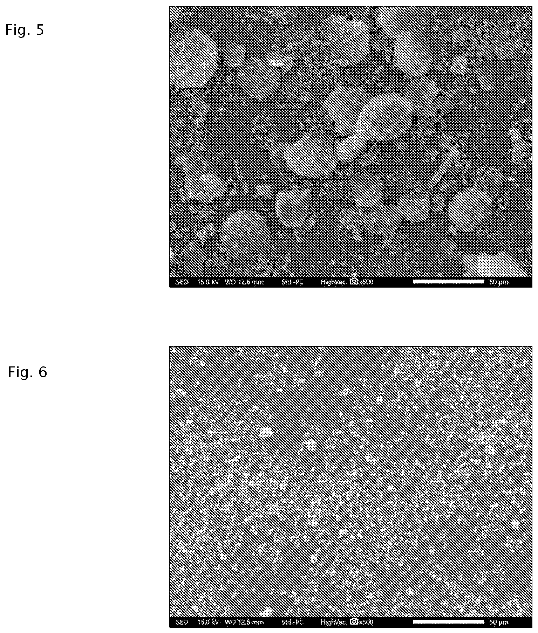

[FIG. 5] FIG. 5 is a SEM examination image of the alumina particles obtained in Comparative Example 6.
[FIG. 6] FIG. 6 is a SEM examination image of the alumina particles obtained in Comparative Example 8.

### DESCRIPTION OF EMBODIMENTS

Hereinbelow, the plate-like alumina particle according to an embodiment of the present invention and a method for producing the plate-like alumina particle will be described in detail.

### <Plate-like alumina particle>

The plate-like alumina particle of the present embodiment comprises at least one element (A) selected from the group consisting of an iron element, a nickel element, a copper element, a chromium element, a cobalt element, a zinc element, a scandium element, and a ruthenium element (hereinafter, frequently referred to simply as "element (A)"), and a titanium element.

In the present embodiment, the term "plate-like" means that the alumina particle has an aspect ratio of 2 or more, which is obtained by dividing the average particle diameter of the alumina particle by the thickness. In the present description, the expression "thickness of the alumina particle" means an arithmetic mean value of the thickness values measured with respect to at least 50 plate-like alumina particles randomly selected from an image obtained by means of a scanning electron microscope (SEM). Further, the expression "average particle diameter of the alumina particle" means a value determined as a volume-based median diameter D₅₀ from a volume-based particle size cumulative distribution, as measured by a laser diffraction particle diameter measurement apparatus.

### (Element (A))

In the present embodiment, the element (A) is at least one member selected from the group consisting of an iron element, a nickel element, a copper element, a chromium element, a cobalt element, a zinc element, a scandium element, and a ruthenium element, preferably at least one member selected from the group consisting of an iron element, a nickel element, a copper element, a chromium element, a cobalt element, and a zinc element, further preferably at least one member selected from the group consisting of an iron element, a nickel element, and a chromium element.

In the present embodiment, from the viewpoint of easy availability and easy synthesis, the element (A) is preferably derived from at least one compound (A) selected from the group consisting of iron hydroxide, iron oxide, iron oxyhydroxide, nickel oxide, copper oxide, chromium oxide, cobalt oxide, zinc oxide, scandium oxide, and ruthenium oxide (hereinafter, frequently referred to simply as "compound (A)"), more preferably derived from at least one compound (A) selected from the group consisting of iron hydroxide, iron oxide, iron oxyhydroxide, nickel oxide, chromium oxide, cobalt oxide, and zinc oxide, further preferably derived from at least one compound (A) selected from the group consisting of iron hydroxide, iron oxide, iron oxyhydroxide, nickel oxide, and chromium oxide.

The plate-like alumina particle of the present embodiment preferably contains the element (A), in terms of an oxide thereof, in an amount of 0.02 to 2% by mass, more preferably 0.04 to 1.5% by mass, further preferably 0.06 to 1% by mass.

When the amount of the element (A) contained is in the above preferred range, formation energy for the plate-like alumina particle is stabilized, so that the particle having a uniform particle diameter can be easily obtained. Further, when the amount of the element (A) contained is the above-mentioned upper limit or less, coloring of the plate-like alumina particle with a deep color is suppressed, and therefore the obtained plate-like alumina particle is advantageously used as a bright pigment or cosmetics.

In the present embodiment, the amount of the element (A) contained is a value determined by subjecting the plate-like alumina particle to XRF (X-ray fluorescence) analysis and obtaining a total of the amounts of the contained elements constituting the element (A), in terms of the oxide thereof (% by mass), from a calibration curve preliminarily obtained with respect to the oxides of the element (A). Alternatively, the amount of the element (A) contained can be determined by subjecting the plate-like alumina particle to ICP (inductively coupled plasma) emission spectrometry and comparing the obtained intensity of the alumina particle with the intensity of a sample having known amounts of the oxides (sample for calibration curve) to determine an amount of each element contained in the plate-like alumina particle, in terms of an oxide thereof (% by mass).

The element (A) is present in a state such that a trivalent aluminum element in the corundum structure of the plate-like alumina particle is replaced by the element (A), that is, the particle is so-called doped with the element (A). With respect to the valence of the element (A), by also adding a tetravalent titanium element, the plate-like alumina particle is doped with the element (A) so as to cause the charge of the whole of crystal to be remain neutral, and therefore the element (A) is presumed to be present as a bivalent element.

### (Titanium element)

In the present embodiment, from the viewpoint of easy availability and easy synthesis, the titanium element is preferably derived from titanium oxide.

The plate-like alumina particle of the present embodiment preferably contains a titanium element, in terms of an oxide thereof, in an amount of 0.02 to 2% by mass, more preferably 0.04 to 1.5% by mass, further preferably 0.06 to 1% by mass.

When the amount of the titanium element contained is in the above preferred range, the plate-like alumina particle can be produced by calcination at a temperature lower than the calcination temperature conventionally employed (for example, at 1,000°C or lower). Further, when the amount of the titanium element contained is the above-mentioned upper limit or less, coloring of the plate-like alumina particle with dark yellow is suppressed, and therefore the obtained plate-like alumina particle is advantageously used as a bright pigment or cosmetics.

In the present embodiment, the amount of the titanium element contained is a value determined by subjecting the plate-like alumina particle to XRF (X-ray fluorescence) analysis and obtaining a total of the amounts of the contained titanium element, in terms of the oxide thereof (% by mass), from a calibration curve preliminarily obtained with respect to the oxides of the titanium element. Alternatively, the amount of the titanium element contained can be determined by subjecting the plate-like alumina particle to ICP (inductively coupled plasma) emission spectrometry and comparing the obtained intensity of the alumina particle with the intensity of a sample having known amounts of the oxides (sample for calibration curve) to determine an amount of the titanium element contained in the plate-like alumina particle, in terms of an oxide thereof (% by mass).

The titanium element is present in a state such that a trivalent aluminum element in the corundum structure of the plate-like alumina particle is replaced by a tetravalent titanium element, that is, the particle is so-called doped with a tetravalent titanium element.

The principle has not completely been elucidated, but is presumed as follows. When the element (A) which is bivalent and a tetravalent titanium element are added at the same time during the calcination, two adjacent aluminum atoms in the crystal structure of the plate-like alumina particle are replaced by a pair of one element (A) and one titanium element so that the elements compensate for charges, and the obtained plate-like alumina particle has changed absorption or reflection of a light, and thus is colored with silver like metallic luster, which is suitable for the use as a high brightness pigment and cosmetics.

With respect to the below-shown conditions for thickness, particle diameter, and aspect ratio of the alumina particle, any combination of the values of thickness, particle diameter, and aspect ratio can be employed as long as the alumina particle has a plate-like shape. Further, the upper limit and the lower limit of the range of values shown in the conditions can be arbitrarily employed in combination.

The plate-like alumina particle preferably has a thickness of 0.05 to 1 µm, more preferably 0.1 to 1 µm, further preferably 0.1 to 0.8 µm.

The alumina particle having the above-mentioned thickness advantageously has high aspect ratio and excellent brightness and mechanical strength.

The plate-like alumina particle preferably has an average particle diameter (D₅₀) of 1 to 30 µm, more preferably 3 to 30 µm, further preferably 5 to 30 µm.

The alumina particle having an average particle diameter (D₅₀) of the above-mentioned lower limit or more has a large area of the reflective surface for a light, and therefore has especially excellent brightness. Further, the alumina particle having an average particle diameter (D₅₀) of the above-mentioned upper limit or less is advantageously used as a filler.

The plate-like alumina particle preferably has an aspect ratio, which is a ratio of the average particle diameter to the thickness, of 5 to 300, preferably 10 to 300, preferably 15 to 300, more preferably 20 to 200, further preferably 30 to 150. When the plate-like alumina particle has an aspect ratio of 2 or more, the plate-like alumina particle advantageously can have two-dimensional mixing properties, and, when the plate-like alumina particle has an aspect ratio of 500 or less, the plate-like alumina particle advantageously has excellent mechanical strength. When the plate-like alumina particle has an aspect ratio of 15 or more, the plate-like alumina particle advantageously exhibits high brightness when used as a pigment.

In the present embodiment, it is preferred that the plate-like alumina particle has a thickness of 0.05 to 1 µm, an average particle diameter of 1 to 30 µm, and an aspect ratio of 5 to 300.

The plate-like alumina particle may have a polygonal plate-like shape, a circular plate-like shape, or an elliptic plate-like shape, but the shape of the particle is preferably, for example, a polygonal plate-like shape or a circular plate-like shape in view of the handling properties and easy production.

The plate-like alumina particle may be one which is obtained according to any method, but, in view of achieving higher aspect ratio, more excellent dispersibility, and more excellent productivity, it is preferred that the plate-like alumina particle is obtained by calcining an aluminum compound in the presence of a molybdenum compound (especially preferably molybdenum trioxide) and a shape controlling agent. With respect to the shape controlling agent, silicon and/or a silicon compound is preferably used. The silicon or silicon compound containing a silicon element is advantageously used as a supply source of Si for the below-mentioned mullite.

In the method for producing the plate-like alumina particle, the molybdenum compound is used as a flux agent. In the present description, hereinafter, the method using a molybdenum compound as a flux agent is frequently referred to simply as "flux method". The flux method is described in detail later. In this connection, it is considered that the calcination causes a molybdenum compound to be reacted with an aluminum compound at a high temperature to form aluminum molybdate, and then the aluminum molybdate is decomposed at a higher temperature into alumina and molybdenum oxide, and, during the decomposition of aluminum molybdate, the molybdenum compound is incorporated into the plate-like alumina particle. The molybdenum oxide evaporates, and is solidified again by cooling, and therefore the resultant solid of molybdenum oxide can be recovered and reused.

When the plate-like alumina particle contains mullite in the surface layer thereof, it is considered that, in the process of calcination, silicon or a compound containing a silicon atom incorporated as a shape controlling agent and an aluminum compound are reacted through molybdenum, so that mullite is formed in the surface layer of the plate-like alumina particle. With respect to the mechanism of formation of mullite, more specifically, it is considered that formation of Mo-O-Si due to a reaction of molybdenum and a Si atom and formation of Mo-O-Al due to a reaction of molybdenum and an Al atom occur on the surface of the plate of alumina, and the alumina is subjected to high-temperature calcination so that Mo is eliminated and mullite having a Si-O-Al bond is formed.

It is preferred that the molybdenum oxide which is not incorporated into the plate-like alumina particle is allowed to evaporate, and recovered and reused. Such a recovery of the molybdenum oxide can reduce the amount of the molybdenum oxide which adheres to the surface of the plate-like alumina, and therefore, when the plate-like alumina is dispersed in a dispersing medium, such as an organic binder like a resin or an inorganic binder like glass, mixing of the molybdenum oxide into the binder is prevented, so that inherent properties of the plate-like alumina can be imparted to the dispersion as effectively as possible.

In the present description, an agent having properties that it is capable of evaporating in the below-described method for producing the plate-like alumina particle is referred to as a flux agent, and an agent that is not capable of evaporating is referred to as a shape controlling agent.

In the production of the plate-like alumina particle, by using molybdenum and a shape controlling agent, the obtained alumina particle has high α-crystallization ratio and is idiomorphic, and therefore can achieve excellent dispersibility and mechanical strength as well as high thermal conductivity.

When the plate-like alumina particle contains mullite in the surface layer thereof, the amount of the mullite formed in the surface layer of the plate-like alumina particle can be controlled by appropriately changing the amounts of the molybdenum compound and shape controlling agent used, but particularly can be controlled by appropriately changing the amount of the silicon or silicon compound containing a silicon element used as a shape controlling agent. A preferred value of the amount of the mullite formed in the surface layer of the plate-like alumina particle and preferred amounts of the raw materials are described in detail later.

The plate-like alumina particle has, for example, a density of 3.70 to 4.10 g/cm³, preferably has a density of 3.72 to 4.10 g/cm³, more preferably has a density of 3.80 to 4.10 g/cm³.

A density of the plate-like alumina particle can be determined by subjecting the plate-like alumina particle to pretreatment under conditions at 300°C for 3 hours, and then measuring a density of the resultant alumina particle using an automatic gas pycnometer AccuPyc II1330, manufactured by Micromeritics Instrument Corporation, under conditions using helium as a carrier gas at a measurement temperature of 25°C.

### [Alumina]

The "alumina" contained in the plate-like alumina particle is aluminum oxide, and may be transition alumina of a crystal form, such as a γ, δ, θ, or κ crystal form, or may contain an alumina hydrate in transition alumina, but, in view of achieving more excellent mechanical strength or thermal conductivity, basically, the alumina is preferably of an α crystal form (α form). The α crystal form is a dense crystal structure of alumina, and advantageously improves the plate-like alumina in mechanical strength or thermal conductivity.

It is preferred that the α-crystallization ratio of the plate-like alumina particle is as close to 100% as possible because the alumina particle easily exhibits inherent properties of the α crystal form. The α-crystallization ratio of the plate-like alumina particle is, for example, 90% or more, preferably 95% or more, more preferably 99% or more.

### [Silicon]

The plate-like alumina particle of the embodiment may contain silicon (Si).

The silicon may be derived from silicon or a silicon compound which can be used as a shape controlling agent. By using the silicon or silicon compound, the plate-like alumina particle having excellent brightness can be produced by the below-described method for producing the plate-like alumina particle.

The plate-like alumina particle of the embodiment may contain silicon. The plate-like alumina particle of the embodiment may contain silicon in the surface layer thereof.

The term "surface layer" means 10 nm or less from the surface of the plate-like alumina particle of the embodiment. This distance corresponds to the detection depth of XPS used in the measurement conducted in the Examples below.

In the plate-like alumina particle, silicon may be locally present in the surface layer. The expression" be locally present in the surface layer" means a state in which the mass of silicon per unit volume in the surface layer of the plate-like alumina particle is larger than the mass of silicon per unit volume in the portion of the particle other than the surface layer. Whether silicon is locally present in the surface layer can be clarified by comparing the results of the surface analysis made by XPS and those of the analysis made by XRF with respect to the whole of the particle.

The silicon that the plate-like alumina particle contains may be silicon simple substance, or may be silicon in the silicon compound. The plate-like alumina particle may contain, as silicon or a silicon compound, at least one member selected from the group consisting of mullite, Si, SiO₂, SiO, and aluminum silicate formed by reaction with alumina, and may contain the above-mentioned substance in the surface layer thereof. Mullite is described later.

With respect to the plate-like alumina particle, when using silicon or a silicon compound containing a silicon element as a shape controlling agent, Si can be detected by an XRF analysis. With respect to the plate-like alumina particle, the molar ratio of Si to Al [Si]/[Al], as obtained by an XRF analysis, is, for example, 0.04 or less, preferably 0.035 or less, more preferably 0.02 or less. Further, with respect to the value of the molar ratio [Si]/[Al], there is no particular limitation, but the molar ratio is, for example, 0.003 or more, preferably 0.004 or more, more preferably 0.005 or more.

With respect to the plate-like alumina particle, the molar ratio of Si to Al [Si]/[Al], as obtained by an XRF analysis, is, for example, 0.003 to 0.04, preferably 0.004 to 0.035, more preferably 0.005 to 0.02. When the value of the molar ratio [Si]/[Al], as obtained by an XRF analysis, is in the above range, the plate-like alumina particle satisfies the above-mentioned values of the average particle diameter, thickness, and aspect ratio, and more excellent brightness is obtained, and excellent plate-like shape is formed. Further, a deposit is unlikely to adhere to the surface of the plate-like alumina particle, so that the obtained plate-like alumina particle has excellent quality. Such a deposit appears to be SiO₂ particles, and it is considered that formation of mullite in the surface layer of the plate-like alumina particle is saturated so that excess Si forms a deposit.

The plate-like alumina particle can contain silicon corresponding to the silicon or silicon compound containing a silicon element used in the method for producing the plate-like alumina particle. The amount of the silicon contained in the plate-like alumina particle (100% by mass), in terms of silicon dioxide, is preferably 10% by mass or less, more preferably 0.1 to 10% by mass, further preferably 0.1 to 5% by mass.

When the amount of the silicon contained in the plate-like alumina particle is in the above range, the above-mentioned values of the average particle diameter, thickness, and aspect ratio are satisfied, and more excellent brightness is obtained, and excellent plate-like shape is formed. Further, a deposit which appears to be SiO₂ particles is unlikely to adhere to the surface of the plate-like alumina particle, so that the obtained plate-like alumina particle has excellent quality.

### (Mullite)

The plate-like alumina particle of the embodiment may contain mullite. It is presumed that when mullite is contained in the surface layer of the plate-like alumina particle, the selectivity for an inorganic material constituting an inorganic covering portion is improved, making it possible to efficiently form an inorganic covering portion on the plate-like alumina particle.

The mullite contained in the surface layer of the plate-like alumina particle remarkably reduces wear of a device. The "mullite" that the plate-like alumina particle can contain in the surface layer thereof is a compound oxide of Al and Si and represented by Al_{X}Si_{Y}O_{z}, and, with respect to the values of x, y, and z, there is no particular limitation. A more preferred range of the values for the formula corresponds to Al₂Si₁O₅ through Al₆Si₂O₁₃. In the Examples described below, XRD peak intensities are found with respect to the mullite comprising Al_{2.85}Si₁O_{6.3}, Al₃Si₁O_{6.5}, Al_{3.67}Si₁O_{7.5}, Al₄Si₁O₈, or Al₆Si₂O₁₃. The plate-like alumina particle may contain in the surface layer thereof at least one compound selected from the group consisting of Al_{2.85}Si₁O_{6.3}, Al₃Si₁O_{6.5}, Al_{3.67}Si₁O_{7.5}, Al₄Si₁O₈, and Al₆Si₂O₁₃. The term "surface layer" means 10 nm or less from the surface of the plate-like alumina particle. This distance corresponds to the detection depth of XPS used in the measurement conducted in the Examples below.

In the plate-like alumina particle, it is preferred that mullite is locally present in the surface layer. The expression "mullite is locally present in the surface layer" means a state in which the mass of mullite per unit volume in the surface layer of the plate-like alumina particle is larger than the mass of mullite per unit volume in the portion of the particle other than the surface layer.

Further, the mullite in the surface layer may form a mullite layer, and may be in a state such that mullite and alumina are present and mixed with each other. The interface between mullite and alumina in the surface layer may be in a state such that mullite and alumina are physically contacted with each other, or may be in a state such that mullite and alumina together form a chemical bond, such as Si-O-Al.

### [Molybdenum]

The plate-like alumina particle of the embodiment may contain molybdenum. Further, the plate-like alumina particle preferably contains molybdenum in the surface layer thereof.

The molybdenum may be derived from the molybdenum compound used as a flux agent in the below-described method for producing the alumina particle.

The molybdenum has a catalytic function and an optical function. Further, by using molybdenum, in the below-described method for producing the plate-like alumina particle, the plate-like alumina particle not only having a plate-like shape but also having high crystalline properties and excellent brightness can be produced.

When the amount of the molybdenum used is increased, the particle size and the above-mentioned values of the average particle diameter, thickness, and aspect ratio are satisfied, and the obtained alumina particle is likely to have further excellent brightness. Further, by using molybdenum, formation of mullite is promoted, enabling production of the plate-like alumina particle having high aspect ratio and excellent dispersibility. In addition, by utilizing the properties of the molybdenum contained in the plate-like alumina particle, the plate-like alumina particle can be applied to the use as an oxidation reaction catalyst and an optical material.

The molybdenum compound is preferably a molybdenum oxide, especially preferably molybdenum trioxide. The molybdenum oxide has an extremely high degree of acidity, and further undergoes a reaction in a gaseous state at 800°C or higher, and therefore a reaction of the molybdenum compound as a flux agent with an aluminum oxide is very likely to proceed, so that the unreacted raw materials, transition alumina, and the like can be advantageously prevented from remaining in the particle.

The molybdenum compound may be contained in the plate-like alumina particle in any form of polygons which the molybdenum compound can have, or in combination thereof, and may be contained in the plate-like alumina particle in the form of α-MoO₃, β-MoO₃, MoO₂, MoO, a molybdenum cluster structure, or the like.

With respect to the form of the molybdenum contained in the plate-like alumina particle, there is no particular limitation, and molybdenum may be contained in the form of adhering to the surface of the plate-like alumina particle, or may be contained in the form of being replaced by part of aluminum in the crystal structure of alumina, or these forms may be employed in combination.

The amount of the molybdenum contained in the plate-like alumina particle (100% by mass), in terms of molybdenum trioxide, as obtained by an XRF analysis, is preferably 10% by mass or less, and, when the calcination temperature, calcination time, or evaporation rate of the molybdenum compound is controlled, the amount of the molybdenum is more preferably 0.001 to 5% by mass, further preferably 0.01 to 5% by mass, especially preferably 0.1 to 3% by mass. When the amount of the molybdenum contained in the plate-like alumina particle is 10% by mass or less, the α single crystal of alumina is advantageously improved in quality.

The amount of the molybdenum contained can be determined by an XRF analysis. The XRF analysis is conducted under the same conditions as the conditions for measurement shown in the Examples described below, or under the conditions compatible to the Examples such that similar measurement results are obtained.

Further, an analysis for the Mo amount in the surface of the alumina particle can be carried out using an X-ray photoelectron spectroscopy (XPS) apparatus.

### [Unavoidable impurity]

The alumina particle can contain an unavoidable impurity.

The unavoidable impurity means an impurity which is derived from a metal compound used in the production, or present in the raw materials, or unavoidably mixed into the alumina particle in the production process, and which is not essentially needed and is present in such a small amount that does not affect the properties of the alumina particle.

With respect to the unavoidable impurity, there is no particular limitation, but examples of unavoidable impurities include magnesium, calcium, strontium, barium, yttrium, lanthanum, cerium, and sodium. These unavoidable impurities may be contained individually or in combination.

The amount of the unavoidable impurity contained in the alumina particle is preferably 10,000 ppm or less, more preferably 1,000 ppm or less, further preferably 10 to 500 ppm, based on the mass of the alumina particle.

### <Method for producing the plate-like alumina particle>

With respect to the method for producing the plate-like alumina particle, there is no particular limitation, and a conventionally known technique can be appropriately employed, but, from the viewpoint of enabling advantageous control of alumina having high α-crystallization ratio at a relatively low temperature, the method for producing the plate-like alumina particle by a flux method using a molybdenum oxide can be preferably employed.

A preferred method for producing the plate-like alumina particle comprises the step of calcining an aluminum compound in the presence of a molybdenum oxide, a silicon compound, and, if desired, an arbitrary additive (for example, a metal or a transition metal additive). With respect to the metal or transition metal additive, there is no particular limitation, and, for example, an arbitrary metal or transition metal in the range of Groups 1 to 13 can be used, and more preferred are a compound (A) comprising at least one element (A) selected from the group consisting of an iron element, a nickel element, a copper element, a chromium element, a cobalt element, a zinc element, a scandium atom, and a ruthenium element (hereinafter, frequently referred to simply as "compound (A)"), and a titanium compound.

More specifically, the preferred method for producing the plate-like alumina particle comprises the steps of: mixing an aluminum compound, a molybdenum compound, a silicon compound, and a metal or a transition metal additive to obtain a mixture; and calcining the mixture.

### [Mixing step]

The mixing step is the step of mixing a molybdenum oxide, a silicon compound, a compound (A), and a titanium compound to obtain a mixture. The contents of the mixture are described below.

### (Aluminum compound)

With respect to the aluminum compound, there is no particular limitation as long as the aluminum compound can be used as a raw material for the plate-like alumina particle of the present embodiment and can form alumina by heat treatment, and, for example, aluminum chloride, aluminum sulfate, basic aluminum acetate, aluminum hydroxide, boehmite, pseudoboehmite, transition alumina (such as γ-alumina, δ-alumina, or θ-alumina), α-alumina, or mixed alumina having two or more crystal phases can be used, and, with respect to the physical form of these aluminum compounds as a precursor, such as a form, a particle diameter, or a specific surface area, there is no particular limitation, but, from the viewpoint of the reactivity and easy availability of the raw material at a low cost, aluminum hydroxide is especially preferred.

In the flux method described in detail later, with respect to the form of the aluminum compound, the aluminum compound having any form of, for example, a spherical form, an indefinite form, a structure having a high aspect ratio (such as a wire, a fiber, a ribbon, or a tube), or a sheet can be preferably used.

Similarly, with respect to the particle diameter of the aluminum compound, in the flux method described in detail later, a solid of the aluminum compound having a particle diameter of several nm to several hundred µm can be advantageously used.

With respect to the specific surface area of the aluminum compound, there is no particular limitation. For causing a molybdenum compound to effectively react with the aluminum compound, the aluminum compound preferably has a larger specific surface area, but, by controlling the conditions for calcination or the amount of the molybdenum compound used, the aluminum compound having any value of specific surface area can be used as a raw material.

Further, the aluminum compound may be comprised only of an aluminum compound, or may be a composite of an aluminum compound and an organic compound. For example, an organic/inorganic composite obtained by modifying the aluminum compound using an organic silane, or an aluminum compound composite having a polymer adsorbed thereon can be preferably used. When using such a composite, with respect to the content of the organic compound in the composite, there is no particular limitation, but, from the viewpoint of enabling efficient production of the plate-like alumina particle, the content of the organic compound is preferably 60% by mass or less, more preferably 30% by mass or less.

### (Silicon or silicon compound)

With respect to the silicon or silicon compound containing a silicon element, there is no particular limitation, and known silicon or silicon compound can be used. Specific examples of silicon or silicon compounds containing a silicon element include artificial or synthetic silicon compounds, such as metal silicon, an organic silane, a silicone resin, silica fine particles, silica gel, mesoporous silica, SiC, and mullite; and natural silicon compounds, such as biosilica. Of these, from the viewpoint of more uniformly forming a composite or mixture of the silicon or silicon compound with an aluminum compound, an organic silane, a silicone resin, or silica fine particles are preferably used. The silicon or silicon compounds containing a silicon element may be used individually or in combination. Further, the silicon or silicon compound containing a silicon element may be used in combination with another shape controlling agent as long as the effects of the invention are not sacrificed.

With respect to the form of the silicon or silicon compound containing a silicon element, there is no particular limitation, and the silicon or silicon compound having a form of, for example, a spherical form, an indefinite form, a structure having a high aspect ratio (such as a wire, a fiber, a ribbon, or a tube), or a sheet can be preferably used.

### (Molybdenum oxide)

As mentioned blow, a molybdenum oxide functions as a flux agent in the α crystal growth of alumina. With respect to the molybdenum oxide, there is no particular limitation, but, from the viewpoint of the reactivity, molybdenum trioxide is preferred.

Among the above-mentioned molybdenum oxides, from the viewpoint of easy evaporation and cost, molybdenum trioxide is preferably used. Molybdenum trioxide vaporizes at around 800°C and becomes in a gas state having energy higher than that of a liquid or a solid to promote formation of a plate-like shape (α form), and therefore molybdenum trioxide is advantageously used for low-temperature calcination. Further, the molybdenum oxides may be used individually or in combination.

### (Compound (A))

From the viewpoint of easy availability and easy synthesis, the compound (A) is preferably at least one compound selected from the group consisting of iron hydroxide, iron oxide, iron oxyhydroxide, nickel oxide, copper oxide, chromium oxide, cobalt oxide, zinc oxide, scandium oxide, and ruthenium oxide, more preferably at least one compound selected from the group consisting of iron hydroxide, iron oxide, iron oxyhydroxide, nickel oxide, chromium oxide, cobalt oxide, and zinc oxide, especially preferably at least one compound selected from the group consisting of iron oxide, iron hydroxide, iron oxyhydroxide, nickel oxide, and chromium oxide.

### (Titanium compound)

From the viewpoint of easy availability and easy synthesis, the titanium compound is preferably titanium oxide.

With respect to the amounts of the above-mentioned aluminum compound, molybdenum oxide, silicon or silicon compound, compound (A), titanium compound used, and the like, there is no particular limitation, but, for example, a mixture containing raw materials in the below-shown respective amounts, in terms of an oxide thereof, based on the total mass of the raw materials (100% by mass), is calcined:
a mixture obtained by mixing together:
   1) preferably an aluminum compound in an amount of 80% by mass or more, more preferably an aluminum compound in an amount of 85 to 95% by mass, further preferably an aluminum compound in an amount of 87 to 95% by mass, in terms of Al₂O₃;
preferably a molybdenum oxide in an amount of 20% by mass or less, more preferably a molybdenum oxide in an amount of 2 to 18% by mass, further preferably a molybdenum oxide in an amount of 5 to 15% by mass, in terms of MoO₃;
preferably silicon or a silicon compound in an amount of 0.1 to 1.5% by mass, more preferably silicon or a silicon compound in an amount of 0.2 to less than 1.3% by mass, further preferably silicon or a silicon compound in an amount of 0.3 to 1.0% by mass, in terms of SiO₂;
preferably a compound (A) in an amount of 0.05 to 1.5% by mass, more preferably a compound (A) in an amount of 0.07 to less than 1.0% by mass, further preferably a compound (A) in an amount of 0.1 to 0.5% by mass, in terms of an oxide thereof; and
preferably a titanium compound in an amount of 0.05 to 1.5% by mass, more preferably a titanium compound in an amount of 0.07 to less than 1.0% by mass, further preferably a titanium compound in an amount of 0.1 to 0.5% by mass.

With respect to the above-mentioned formulation (% by mass) of raw materials, the conditions for the individual raw materials may be arbitrarily employed in combination, and the lower limit and the upper limit in the formulation (% by mass) for each raw material can be arbitrarily employed in combination.

When the compounds in the above-mentioned range of the formulation are used, there can be easily produced the plate-like alumina particle which satisfies the above-mentioned values of the average particle diameter, thickness, and aspect ratio, and which has excellent brightness.

### [Calcination step]

The calcination step is the step of calcining the mixture obtained in the mixing step. As mentioned above, the method having the calcination step using a flux is called a flux method.

The flux method is classified as a solution method. More specifically, the flux method is a method for crystal growth utilizing such a property that the crystal-flux binary system state diagram is of an eutectic crystal type. The mechanism of the flux method is presumed as follows. Specifically, when a mixture of a solute and a flux is heated, the solute and the flux become in a liquid phase. In this instance, the flux serves as a fluxing agent, in other words, the solute-flux binary system state diagram is of an eutectic crystal type, and therefore the solute is melted at a temperature lower than the melting point thereof to constitute the liquid phase. When the flux is allowed to evaporate in this state, the concentration of the flux is lowered, that is, the effect of the flux to lower the melting point of the solute becomes poor, and evaporation of the flux serves as driving force to cause crystal growth of the solute (flux evaporation method). The solute and flux also can cause crystal growth of the solute by cooling the liquid phase (slow cooling method).

The flux method has advantages, for example, in that crystal growth can be caused at a temperature even lower than the melting point, that the crystal structure can be precisely controlled, and that an idiomorphic plate-like crystal can be formed.

With respect to the production of α-alumina particle by the flux method using a molybdenum oxide as a flux, complete elucidation of the mechanism of the production has not yet been made, but, for example, the mechanism is presumed as follows. Specifically, when an aluminum compound is calcined in the presence of a molybdenum oxide, aluminum molybdate is first formed. In this instance, as understood from the above description, the aluminum molybdate causes growth of an α-alumina crystal at a temperature lower than the melting point of alumina. Then, for example, decomposition of aluminum molybdate and evaporation of the flux occur to accelerate crystal growth, obtaining an alumina particle. That is, the molybdenum oxide functions as a flux, and an α-alumina particle is produced through aluminum molybdate which is an intermediate.

By virtue of the flux method, there can be produced the plate-like alumina particle which satisfies the above-mentioned values of the average particle diameter, thickness, and aspect ratio, and which has excellent brightness.

With respect to the method for calcination, there is no particular limitation, and calcination can be conducted by a conventionally known method. When the calcination temperature is higher than 700°C, an aluminum compound and a molybdenum oxide are reacted to form aluminum molybdate. Further, when the calcination temperature is 900°C or higher, the aluminum molybdate is decomposed and reacted with silicon or a silicon compound to form a plate-like alumina particle. Further, in the plate-like alumina particle, it is considered that when the aluminum molybdate is decomposed into alumina and a molybdenum oxide, the molybdenum compound is incorporated into the aluminum oxide particle. Further, the reason is not clear, but the titanium element is incorporated into alumina being formed to lower the energy required for advancing the reaction, and the element (A) is also incorporated into alumina being formed while changing in the valence of the element to cause the energy of the particle to remain constant, achieving the reactions at the same time.

Further, it is considered that when the calcination temperature is 900°C or higher, both crystal growth of the plate-like alumina particle and a reaction of Al₂O₃ and SiO₂ on the surface of the plate-like alumina particle occur in the presence of molybdenum, so that mullite is formed with high efficiency.

In the present embodiment, from the viewpoint of reduction of the energy required for the production of alumina particle, the calcination temperature is preferably 1,000°C or lower.

Further, with respect to the state of the aluminum compound, silicon or silicon compound, molybdenum oxide, compound (A), and titanium compound when being calcined, there is no particular limitation, and the aluminum compound, silicon or silicon compound, molybdenum oxide, compound (A), and titanium compound may be present in the same space so that the silicon or silicon compound, molybdenum oxide, compound (A), and titanium compound can be reacted with the aluminum compound. Specifically, a powder of the silicon or silicon compound, molybdenum oxide, compound (A), titanium compound, and aluminum compound may be mixed by a simple mixing method, for example, using a Henschel mixer, and it is desired that the particle size distribution, specific surface area, bulk specific gravity, and the like of the raw materials are not changed before and after being mixed.

With respect to the calcination temperature conditions, there is no particular limitation, and the calcination temperature conditions are appropriately determined by the above-mentioned average particle diameter, thickness, or aspect ratio of the intended plate-like alumina particle, formation of mullite, dispersibility, or the like. Generally, with respect to the calcination temperature, the lowest temperature for calcination is preferably 900°C or higher, which corresponds to the decomposition temperature of aluminum molybdate (Al₂(MoO₄)₃), more preferably 900 to 1,000°C at which plate-like alumina having a high aspect ratio is formed with high efficiency without causing the raw materials to remain unreacted.

Generally, in order to control the shape of α-alumina obtained after calcination, it is necessary to conduct high-temperature calcination at 2,000°C or higher which is close to the melting point of α-alumina, but, in view of the burden on a calcination furnace or the cost for a fuel, such high-temperature calcination has serious problems of industrial application.

The method of the embodiment can be carried out at a temperature as high as more than 2,000°C, but, even when the method is conducted at a temperature of 1,000°C or lower, which is much lower than the melting point of α-alumina, α-alumina having high α-crystallization ratio and having a plate-like shape with high aspect ratio can be formed, irrespective of the shape of the precursor.

According to an embodiment of the invention, even under conditions at a highest calcination temperature of 900 to 1,000°C, the plate-like alumina particle having high aspect ratio and having an α-crystallization ratio of 90% or more can be efficiently formed at a low cost.

With respect to the calcination time, calcination is preferably performed under conditions such that the time for increasing the temperature to a predetermined highest temperature is in the range of from 15 minutes to 10 hours and the retention time for the calcination highest temperature is in the range of from 5 minutes to 30 hours. For efficiently conducting formation of the plate-like alumina particle, the calcination retention time is more preferably about 10 minutes to 15 hours.

By selecting the conditions at a highest temperature of 900 to 1,000°C for a calcination retention time of 10 minutes to 15 hours, a polygonal plate-like alumina particle of a dense α crystal form is unlikely to suffer aggregation and can be easily obtained.

With respect to the atmosphere for calcination, there is no particular limitation as long as the effects of the present invention can be obtained, but, for example, an oxygen-containing atmosphere, such as air or oxygen, or an inert atmosphere, such as nitrogen, argon, or carbon dioxide, is preferred, and, taking the cost into consideration, an air atmosphere is more preferred.

The apparatus for calcination is not particularly limited, and a so-called calcination furnace can be used. The calcination furnace is preferably formed from a material that does not react with evaporated molybdenum oxide, and further, for efficiently utilizing molybdenum oxide, a calcination furnace having high sealing properties is preferably used.

In the flux method using a molybdenum oxide, the molybdenum oxide is reacted with an aluminum compound to form aluminum molybdate, and then the aluminum molybdate is decomposed and a change of the chemical potential in the process of the decomposition serves as driving force for crystallization, and therefore a polyhedral particle of a hexagonal bipyramid type, which has the idiomorphic plane (113) developed, is formed. It is presumed that the shape controlling agent is localized around the surface of the particle in the α-alumina growth process to remarkably inhibit growth of the idiomorphic plane (113), so that growth of crystal in the plane direction becomes relatively fast to grow the (001) plane or (006) plane, enabling formation of a plate-like shape. Accordingly, by using a molybdenum compound as a flux agent, the plate-like alumina particle comprising molybdenum and having high α-crystallization ratio can be more easily formed.

### [Cooling step]

When the molybdenum compound is used as a flux agent, the method for producing the alumina particle may comprise the cooling step. The cooling step is the step of cooling alumina which has experienced crystal growth in the calcination step. More specifically, the cooling step may be the step of cooling the composition containing the alumina obtained in the calcination step and the flux agent in a liquid phase.

With respect to the cooling rate, there is no particular limitation, but the cooling rate is preferably 1 to 1,000°C/hour, more preferably 5 to 500°C/hour, further preferably 50 to 100°C/hour. When the cooling rate is 1°C/hour or more, the production time can be advantageously reduced. On the other hand, when the cooling rate is 1,000°C/hour or less, the container for calcination is unlikely to be cracked due to heat shock so that it can be advantageously used for a long term.

With respect to the method for cooling, there is no particular limitation, and air cooling may be conducted, or a cooling apparatus may be used.

### [Post-treatment step]

The method for producing the plate-like alumina particle of the embodiment may comprise the post-treatment step. The post-treatment step is the post-treatment step for the plate-like alumina particle, which is the step of removing the flux agent. The post-treatment step may be performed after the above-mentioned calcination step, may be performed after the above-mentioned cooling step, or may be performed after the calcination step and cooling step. Further, if necessary, the post-treatment step may be repeated two or more times.

As examples of methods for the post-treatment, there can be mentioned washing and a high-temperature treatment. These methods can be used in combination.

With respect to the method for washing, there is no particular limitation, but removal can be made by washing with water, an aqueous ammonia solution, an aqueous sodium hydroxide solution, or an acidic aqueous solution.

In this instance, the amount of the molybdenum contained can be controlled by appropriately changing the concentration or amount of the water, aqueous ammonia solution, aqueous sodium hydroxide solution, or acidic aqueous solution used, and the portion to be washed, the washing time, or the like.

Further, as examples of methods for the high-temperature treatment, there can be mentioned a method in which the temperature of the particle is increased to the sublimation temperature or boiling point of the flux or higher.

### [Pulverization step]

With respect to the calcination product, the plate-like alumina particle in the calcination product may have suffered aggregation, and thus cannot satisfy the preferred range of the particle diameter in the invention. Therefore, the plate-like alumina particle, if necessary, may be pulverized so as to satisfy the preferred range of the particle diameter in the invention.

With respect to the method for pulverizing the calcination product, there is no particular limitation, and a conventionally known pulverization method, such as a ball mill, a jaw crusher, a jet mill, a disc mill, SpectroMill, a grinder, or a mixer mill, can be used.

### [Classification step]

The plate-like alumina particle is preferably subjected to classification treatment for controlling the average particle diameter to improve the fluidity of the powder, or for suppressing an increase of the viscosity when the particle is incorporated into a binder used for forming a matrix. The term "classification treatment" means a procedure of classifying particles into groups according to the size of the particle.

The classification may be any of wet classification and dry classification, but, from the viewpoint of the productivity, dry classification is preferred. The dry classification includes classification using a sieve and air classification in which classification is made due to a difference between a centrifugal force and a fluid drag, but, from the viewpoint of the precision of classification, air classification is preferred, and classification can be performed using a classifier, such as an air classifier utilizing the Coanda effect, a rotating air classifier, a forced vortex centrifugal classifier, or a semi-free vortex centrifugal classifier.

The above-mentioned pulverization step and classification step can be conducted at any necessary stage including before and after the below-described organic compound layer forming step. By conducting the pulverization or classification or omitting them or appropriately selecting the conditions therefor, for example, the obtained plate-like alumina particle can be controlled in the average particle diameter.

With respect to the plate-like alumina particle of the embodiment, or the plate-like alumina particle obtained by the method of the embodiment, the plate-like alumina particle which has suffered aggregation to a small extent or which has not suffered aggregation easily exhibits inherent properties of the alumina particle, and has more excellent handling properties of the alumina particle, and further, when used in the form of being dispersed in a dispersing medium, such a plate-like alumina particle is preferred from the viewpoint of more excellent dispersibility. In the method for producing the plate-like alumina particle, it is preferred that the plate-like alumina particle which suffered aggregation to a small extent or which has not suffered aggregation is obtained without conducting the above-mentioned pulverization step and classification step, because there is no need to perform the above steps, and the plate-like alumina having intended excellent properties can be produced with high productivity.

### EXAMPLES

Hereinbelow, the present invention will be described in more detail with reference to the following Examples, which should not be construed as limiting the scope of the present invention.

### [Analysis of shape of plate-like alumina particles by means of a scanning electron microscope]

Using a scanning electron microscope SEM-EDS JEOL7000 (manufactured by JEOL Ltd.), measurement was made under conditions at an accelerating voltage of 15 kV.

### [Compositional analysis of plate-like alumina particles by X-ray fluorescence]

Using an X-ray fluorescence (XRF) analysis apparatus Primus IV (manufactured by Rigaku Corporation), about 70 mg of the prepared sample was placed on filter paper, and covered with a PP film and subjected to compositional analysis. From the amounts of the elements determined from the results of XRF analysis, the amounts of the individual elements contained in the plate-like alumina particle were determined, in terms of the oxide thereof (% by mass).

### [Analysis of crystal phase by an X-ray diffractometry (XRD) method]

The prepared sample was placed in a depressed portion of a measurement sample holder having a depth of 0.5 mm (product manufactured by Rigaku Corporation) in an appropriate sufficient amount, and the holder was filled with the sample and a glass plate was pulled over the sample while lightly pressing the glass plate against the sample so that the surface of the sample to be measured became smooth, and the resultant holder was set in a wide-angle X-ray diffraction (XRD) apparatus Ultima IV (manufactured by Rigaku Corporation), and subjected to measurement under conditions using a Cu/Kα ray at 40 kV/30 mA and at a scanning speed of 2 degrees/minute in the scanning range of from 10 to 70 degrees.

### [Particle size distribution measurement]

Using a laser diffraction particle size distribution meter HELOS (H3355) & RODOS, R3: 0.5/0.9-175 µm (manufactured by Japan Laser Corp.), a particle size distribution was measured under dry conditions at a dispersion pressure of 3 bar and a vacuum pressure of 90 mbar.

### [Evaluation of metallic luster]

In each of the Examples and Comparative Examples, completion of the reaction was evaluated in accordance with the following criteria.
A: When the powder was directly spread over and applied to a skin, brightness like metallic luster could be found by visual observation.
B: When the powder was directly spread over and applied to a skin, brightness like metallic luster could not be found by visual observation.

### [Evaluation of completion of the reaction]

In each of the Examples and Comparative Examples, completion of the reaction was evaluated in accordance with the following criteria.
A: A raw material or transition alumina was not found by SEM examination and XRD.
B: A raw material or transition alumina was found by SEM examination and XRD.

### [Example 1]

10 g of aluminum hydroxide (manufactured by Nippon Light Metal Co., Ltd.; average particle diameter: 1.2 µm), 1 g of molybdenum trioxide (manufactured by Nippon Inorganic Colour & Chemical Co., Ltd.), 0.05 g of silicon dioxide (manufactured by Tosoh Silica Corporation), 0.0115 g of iron oxyhydroxide (manufactured by Kanto Chemical Co., Inc.), and 0.0103 g of titanium oxide (manufactured by Nippon Aerosil Co., Ltd.) were weighed and placed in a plastic bag, and mixed by manually shaking the bag for 5 minutes to obtain a mixture. The obtained mixture was placed in a crucible, and the crucible was set in a ceramic electric furnace and the temperature of the mixture was increased to 1,000°C under conditions at 5°C/minute, and retained at 1,000°C for 10 hours to perform calcination. Then, the temperature was reduced to room temperature under conditions at 5°C/minute, and then the crucible was removed from the furnace, obtaining a silver powder. Subsequently, the obtained silver powder was dispersed in 300 mL of 0.25% aqueous ammonia, and the resultant dispersion was stirred at room temperature (25 to 30°C) for 2 hours, and then passed through a 106 µm sieve, and subjected to filtration to remove aqueous ammonia, and washed with water and dried to remove molybdenum remaining on the surface of the particle, obtaining a silver powder. From the SEM examination and particle size distribution measurement, it was found that all the raw materials were consumed, and that the powder was a plate-like alumina particle having an average particle diameter of 21.6 µm. Further, XRD measurement was conducted, and, as a result, a sharp scattering peak ascribed to α-alumina appeared, and an alumina crystal system peak other than the peak of α crystal structure was not observed. The results are shown in Tables 2 and 3.

### [Examples 2 to 10]

Plate-like alumina particles were obtained in substantially the same manner as in Example 1 except that the raw material formulation shown in Table 1 was used. The results are shown in Tables 2 and 3.

### [Comparative Example 1]

10 g of aluminum hydroxide (manufactured by Nippon Light Metal Co., Ltd.; average particle diameter: 1.2 µm), 1 g of molybdenum trioxide (manufactured by Nippon Inorganic Colour & Chemical Co., Ltd.), and 0.05 g of silicon dioxide (manufactured by Tosoh Silica Corporation) were weighed and placed in a plastic bag, and mixed by manually shaking the bag for 5 minutes to obtain a mixture. The obtained mixture was placed in a crucible, and the crucible was set in a ceramic electric furnace and the temperature of the mixture was increased to 1,000°C under conditions at 5°C/minute, and retained at 1,000°C for 10 hours to perform calcination. Then, the temperature was reduced to room temperature under conditions at 5°C/minute, and then the crucible was removed from the furnace, obtaining a bluish white powder. Subsequently, the obtained bluish white powder was dispersed in 300 mL of 0.25% aqueous ammonia, and the resultant dispersion was stirred at room temperature (25 to 30°C) for 2 hours, and then passed through a 106 µm sieve, and subjected to filtration to remove aqueous ammonia, and washed with water and dried to remove molybdenum remaining on the surface of the particle, obtaining a bluish white powder. From the SEM examination and particle size distribution measurement, the powder was found to be a mixture of alumina particles and fine particles of the raw materials. Further, XRD measurement was conducted, and, as a result, a sharp scattering peak ascribed to α-alumina and a sharp scattering peak ascribed to δ-alumina appeared, and, from this, it was found that the reaction was not completed. The results are shown in Tables 2 and 3.

### [Comparative Examples 2 to 8]

Alumina particles were obtained in substantially the same manner as in Example 1 except that the raw material formulation shown in Table 1 was used. The results are shown in Tables 2 and 3.

**[Table 1]**

| | Raw material formulation | | | | | | | | | | | | | |
|---|---|---|---|---|---|---|---|---|---|---|---|---|---|---|
| | Al(OH)₃ | MoO₃ | K₂CO₃ | SiO₂ | FeOOH | TiO₂ | Fe₂O₃ | NiO | CuO | Cr₂O₃ | Co₃O₄ | ZnO | ZrO₂ | MnO₂ |
| | g | g | g | g | g | g | g | g | g | g | g | g | g | g |
| Example 1 | 10 | 1 | - | 0.05 | 0.0115 | 0.0103 | - | - | - | - | - | - | - | - |
| Example 2 | 10 | 1 | - | 0.05 | 0.0115 | 0.0258 | - | - | - | - | - | - | - | - |
| Example 3 | 10 | 1 | - | 0.05 | 0.0285 | 0.0154 | - | - | - | - | - | - | - | - |
| Example 4 | 10 | 1 | - | 0.05 | 0.0115 | 0.0154 | - | - | - | - | - | - | - | - |
| Example 5 | 10 | 1 | - | 0.05 | - | 0.0103 | 0.0256 | - | - | - | - | - | - | - |
| Example 6 | 10 | 1 | - | 0.05 | - | 0.0103 | - | 0.0240 | - | - | - | - | - | - |
| Example 7 | 10 | 1 | - | 0.05 | - | 0.0103 | - | - | 0.0255 | - | - | - | - | - |
| Example 8 | 10 | 1 | - | 0.05 | - | 0.0103 | - | - | - | 0.0487 | - | - | - | - |
| Example 9 | 10 | 1 | - | 0.05 | - | 0.0154 | - | - | - | - | 0.0309 | - | - | - |
| Example 10 | 10 | 1 | - | 0.05 | - | 0.0103 | - | - | - | - | - | 0.0261 | - | - |
| Comparative Example 1 | 10 | 1 | - | 0.05 | - | - | - | - | - | - | - | - | - | - |
| Comparative Example 2 | 10 | 1 | - | 0.05 | 0.0115 | - | - | - | - | - | - | - | - | - |
| Comparative Example 3 | 10 | 1 | - | 0.05 | 0.0285 | - | - | - | - | - | - | - | 0.0158 | - |
| Comparative Example 4 | 10 | 1 | - | 0.05 | - | 0.0103 | - | - | - | - | - | - | - | 0.0279 |
| Comparative Example 5 | 10 | 1 | - | 0.05 | 0.0285 | - | - | - | - | - | - | - | - | 0.0112 |
| Comparative Example 6 | 10 | 1 | 0.096 | 0.05 | - | 0.0103 | - | 0.0240 | - | - | - | - | - | - |
| Comparative Example 7 | 10 | 1 | 0.192 | 0.05 | - | 0.0103 | - | 0.0240 | - | - | - | - | - | - |
| Comparative Example 8 | 10 | 1 | 0.958 | 0.05 | - | 0.0103 | - | 0.0240 | - | - | - | - | - | - |

**[Table 2]**

| | Conditions for calcination | | Appearance | Metallic luster | Particle size distribution [L] | | | Thickness [D] | Aspect ratio | Completion of reaction (No fine particles) |
|---|---|---|---|---|---|---|---|---|---|---|
| | Temperature | Time | | | D₁₀ | D₅₀ | D₉₀ | | | |
| | °C | hr | | | µm | µm | µm | µm | [L]/[D] | |
| Example 1 | 1,000 | 10 | Silver | A | 8.0 | 21.6 | 39.9 | 0.3 | 72 | A |
| Example 2 | 1,000 | 10 | Silver | A | 6.4 | 17.4 | 32.0 | 0.3 | 58 | A |
| Example 3 | 1,000 | 10 | Silver | A | 7.2 | 19.0 | 34.9 | 0.3 | 63 | A |
| Example 4 | 1,000 | 10 | Silver | A | 7.6 | 20.3 | 37.4 | 0.3 | 68 | A |
| Example 5 | 1,000 | 10 | Silver | A | 7.8 | 21.0 | 41.3 | 0.5 | 42 | A |
| Example 6 | 1,000 | 10 | Silver | A | 8.3 | 23.5 | 47.0 | 0.3 | 78 | A |
| Example 7 | 1,000 | 10 | Pale black silver | A | 8.0 | 22.0 | 42.4 | 0.5 | 44 | A |
| Example 8 | 1,000 | 10 | Pale reddish silver | A | 8.0 | 20.4 | 37.9 | 0.3 | 68 | A |
| Example 9 | 1,000 | 10 | Silver | A | 6.4 | 17.8 | 35.7 | 0.3 | 59 | A |
| Example 10 | 1,000 | 10 | Silver | A | 7.5 | 22.5 | 46.1 | 0.4 | 56 | A |
| Comparative Example 1 | 1,000 | 10 | White | B | 0.9 | 10.1 | 17.2 | 0.6 | 29 | B |
| Comparative Example 2 | 1,000 | 10 | White | B | 6.9 | 20.4 | 42.4 | 0.3 | 68 | B |
| Comparative Example 3 | 1,000 | 10 | White | B | 1.2 | 17.5 | 37.4 | 0.5 | 35 | B |
| Comparative Example 4 | 1,000 | 10 | Opaque brownish silver | B | 6.5 | 20.4 | 41.8 | 0.5 | 41 | B |
| Comparative Example 5 | 1,000 | 10 | Opaque brown | B | 6.3 | 22.7 | 43.1 | 0.4 | 57 | B |
| Comparative Example 6 | 1,000 | 10 | White | B | 0.9 | 13.5 | 34.7 | 0.3 | 45 | B |
| Comparative Example 7 | 1,000 | 10 | White | B | 0.8 | 4.2 | 20.2 | 0.5 | 8 | B |
| Comparative Example 8 | 1,000 | 10 | White | B | 0.6 | 1.3 | 2.6 | - | - | B |

**[Table 3]**

| | Results of XRF analysis | | | | | | | | | | | |
|---|---|---|---|---|---|---|---|---|---|---|---|---|
| | Al₂O₃ | MoO₃ | SiO₂ | Fe₂O₃ | TiO₂ | NiO | CuO | Cr₂O₃ | Co₃O₄ | ZnO | MnO₂ | ZrO₂ |
| | % | % | % | % | % | % | % | % | % | % | % | % |
| Example 1 | 97.7 | 1.8 | 0.4 | 0.2 | - | - | - | - | - | - | - | - |
| Example 2 | 97.7 | 1.2 | 0.5 | 0.2 | 0.4 | - | - | - | - | - | - | - |
| Example 3 | 97.3 | 1.6 | 0.5 | 0.5 | - | - | - | - | - | - | - | - |
| Example 4 | 97.8 | 1.6 | 0.5 | 0.2 | - | - | - | - | - | - | - | - |
| Example 5 | 96.8 | 1.7 | 0.7 | 0.5 | 0.2 | - | - | - | - | - | - | - |
| Example 6 | 96.8 | 2.2 | 0.5 | - | - | 0.5 | - | - | - | - | - | - |
| Example 7 | 97.7 | 1.4 | 0.5 | - | 0.3 | - | 0.1 | - | - | - | - | - |
| Example 8 | 98.2 | 0.9 | 0.5 | - | - | - | - | 0.3 | - | - | - | - |
| Example 9 | 96.4 | 2.1 | 0.6 | - | 0.3 | - | - | - | 0.5 | - | - | - |
| Example 10 | 97.0 | 1.6 | 0.5 | - | 0.3 | - | - | - | - | 0.5 | - | - |
| Comparative Example 1 | 98.0 | 1.4 | 0.5 | - | - | - | - | - | - | - | - | - |
| Comparative Example 2 | 98.1 | 1.2 | 0.5 | 0.2 | - | - | - | - | - | - | - | - |
| Comparative Example 3 | 96.4 | 2.2 | 0.5 | 0.5 | - | - | - | - | - | - | - | 0.4 |
| Comparative Example 4 | 97.5 | 1.5 | 0.5 | - | - | - | - | - | - | - | 0.5 | - |
| Comparative Example 5 | 97.3 | 1.5 | 0.5 | 0.6 | - | - | - | - | - | - | 0.2 | - |
| Comparative Example 6 | 97.1 | 2.1 | 0.5 | - | 0.2 | 0.4 | - | - | - | - | - | - |
| Comparative Example 7 | 92.5 | 6.0 | 0.6 | - | 0.1 | 0.5 | - | - | - | - | - | - |
| Comparative Example 8 | 90.9 | 1.1 | 0.3 | - | 0.2 | 0.3 | - | - | - | - | - | - |

From the results shown in Tables 2 and 3, it was found that, in Examples 1 to 10, the plate-like alumina particle having brightness like metallic luster could be produced even at a calcination temperature of 1,000°C.

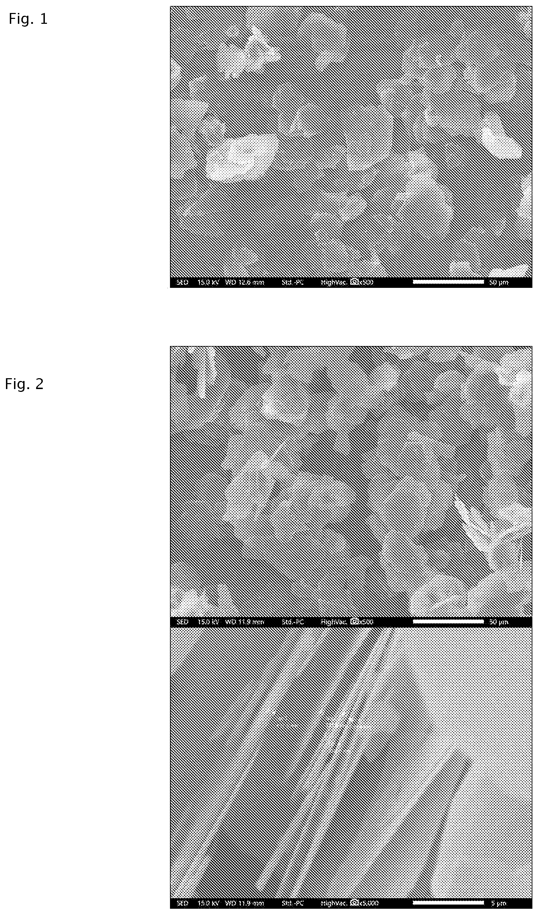

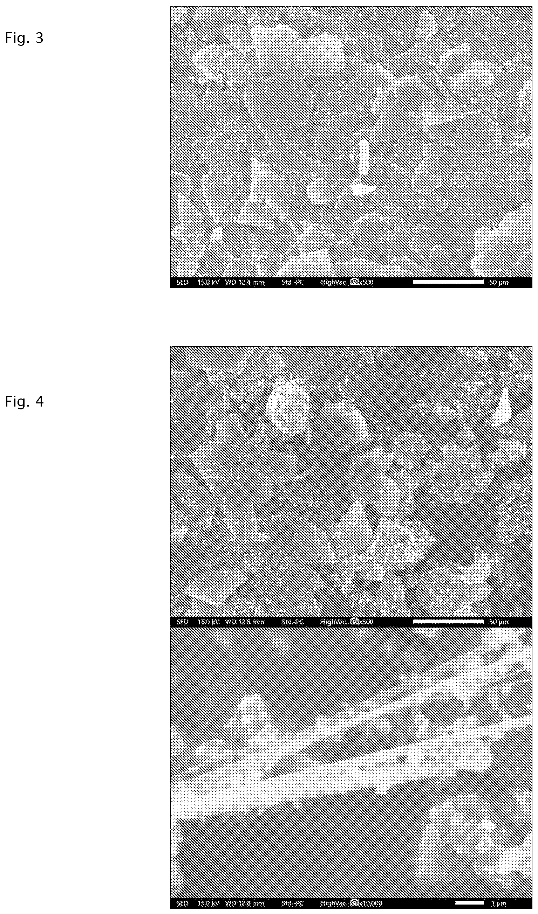

FIG. 1 is a SEM examination image of the plate-like alumina particles obtained in Example 1. FIG. 2 shows SEM examination images of the plate-like alumina particles obtained in Example 8. FIG. 3 is a SEM examination image of the alumina particles obtained in Comparative Example 1. FIG. 4 shows SEM examination images of the alumina particles obtained in Comparative Example 2.

From the results shown in FIGs. 1 to 4, it was found that, in Examples 1 and 8, the reaction was completed, and only the plate-like alumina particle was obtained. In this connection, it was found that when potassium carbonate was used to generate a molybdate in the system and the molybdate was used as a flux agent, the unreacted raw materials and the like remained.

Hereinabove, preferred Examples of the present invention have been described, but these Examples should not be construed as limiting the scope of the invention. Addition, omission, replacement, and other changes of the construction of the present invention can be made as long as the plate-like alumina particle of the present invention can be obtained. The present invention is not limited by the above description, but limited only by the appended claims.

## Claims

1. A plate-like alumina particle comprising at least one element (A) selected from the group consisting of an iron element, a nickel element, a copper element, a chromium element, a cobalt element, a zinc element, a scandium element, and a ruthenium element, and a titanium element.

2. The plate-like alumina particle according to claim 1, which contains the at least one element (A), in terms of an oxide thereof, in an amount of 0.02 to 2% by mass.

3. The plate-like alumina particle according to claim 1 or 2, which contains silicon or a silicon compound, in terms of silicon dioxide, in an amount of 0.1 to 10% by mass.

4. The plate-like alumina particle according to claim 3, which contains silicon or a silicon compound in the surface layer thereof.

5. The plate-like alumina particle according to claim 1 or 2, which has a thickness of 0.05 to 1 µm, an average particle diameter of 1 to 30 µm, and an aspect ratio of 5 to 300.

6. A method for producing the plate-like alumina particle according to claim 1 or 2, comprising the steps of:
mixing an aluminum compound, a molybdenum oxide, silicon or a silicon compound, a compound (A) comprising at least one element (A) selected from the group consisting of an iron element, a nickel element, a copper element, a chromium element, a cobalt element, a zinc element, a scandium element, and a ruthenium element, and a titanium compound to obtain a mixture, and
calcining the mixture.
